# DEMANDE DE BREVET EUROPEEN

(11) **EP 2 267 500 A2**
(43) Date de publication de la demande: **29.12.2010**
(21) Numéro de dépôt: 10167406.7
(22) Date de dépôt: 25.06.2010
(51) Int. Cl.: G02B 6/30

(54) **Structure et procédé d'alignement d'une fibre optique et d'un guide d'ondes submicronique**

(30) Priorité: 26.06.2009 FR 0954388
(71) Demandeur: Commissariat à l'Énergie Atomique et aux Énergies Alternatives, 75015 Paris (FR)
(72) Inventeur: Kopp, Christophe, 38120, FONTANIL-CORNILLON (FR)
(74) Mandataire: de Beaumont, Michel

(57) **Abrégé**

L'invention concerne un circuit intégré optique comprenant un guide d'ondes opérationnel submicronique (53) associé à un réseau opérationnel (52) de couplage avec une fibre optique, comprenant en outre un réseau d'alignement (54), identique au réseau opérationnel, associé à un guide d'ondes borgne (55) et disposé à une distance connue du réseau opérationnel.

## Description

### Domaine de l'invention

La présente invention concerne un circuit optique intégré. Plus particulièrement, la présente invention concerne un dispositif et un procédé permettant l'alignement d'une fibre optique et d'un guide d'ondes submicronique d'un circuit optique intégré.

### Exposé de l'art antérieur

Les circuits optiques intégrés sont de plus en plus utilisés dans le domaine des télécommunications, notamment pour la transmission, le traitement ou le stockage de données. Les circuits optiques intégrés peuvent avoir de nombreuses fonctions, par exemple de multiplexage, de démultiplexage, de modulation, de démodulation, de routage spectral, d'amplification, d'accumulation, de filtrage, de résonateur...

Les circuits optiques ou optoélectroniques intégrés sont généralement formés dans et sur des plaquettes semiconductrices similaires à celles utilisées en microélectronique. Un circuit optique intégré comprend un ou plusieurs composants optiques élémentaires réalisant un traitement sur un ou plusieurs faisceaux lumineux, les faisceaux lumineux étant acheminés entre les composants optiques élémentaires par des guides d'ondes optiques. Un circuit optoélectronique intégré comprend en outre un ou plusieurs composants électroniques.

L'intégration de plus en plus de fonctions sur une même puce nécessite une miniaturisation des composants optiques et des guides d'ondes associés. Lorsque les guides d'ondes ont des dimensions inférieures au micromètre, on parle de guides d'ondes submicroniques ou nanométriques. Actuellement, de tels guides d'ondes peuvent avoir des sections de l'ordre de 0,5 x 0,2 µm² pour des ondes dans le domaine du visible et du proche infrarouge et transmettent des modes optiques de dimensions similaires.

Pour des transmissions à moyennes et longues distances, c'est-à-dire de quelques mètres à plusieurs kilomètres, le moyen de transport optique privilégié est la fibre optique. Une fibre optique utilisable dans le domaine du visible et du proche infrarouge transmet ou guide un mode optique ayant un diamètre compris entre 10 µm et quelques dizaines de micromètres. Par conséquent, il est nécessaire d'utiliser des dispositifs de couplage spécifiques entre les fibres optiques et les guides d'ondes submicroniques pour que les faisceaux lumineux circulent correctement entre ces structures guidant des modes optiques de dimensions différentes.

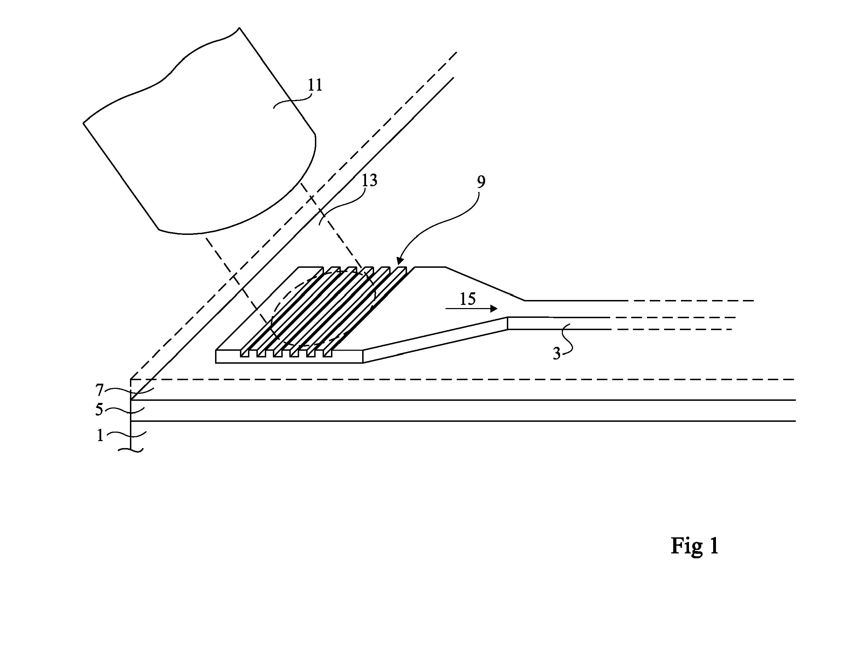

La figure 1 illustre un dispositif connu de couplage à réseau entre une fibre optique et un guide d'ondes submicronique d'un circuit optique intégré. Bien entendu ce dispositif de couplage n'occupe qu'une petite partie d'une puce de circuit intégré. Au-dessus d'un support 1, par exemple en silicium, est formé un guide d'ondes submicronique comprenant un coeur 3 entouré de couches inférieure 5 et supérieure 7 d'indices différents formant gaine optique. Les couches inférieure 5 et supérieure 7 sont par exemple en oxyde de silicium et le coeur 3 par exemple en silicium. La différence d'indice optique entre les matériaux du coeur et de la gaine du guide d'ondes permet le confinement de faisceaux lumineux dans le coeur du guide d'ondes 3. Ce guide d'ondes se prolonge vers des circuits intégrés optiques non représentés.

Un réseau de diffraction 9 est formé en surface du coeur 3. Le réseau de diffraction 9 est par exemple constitué d'un ensemble de rainures parallèles. On peut prévoir, comme cela est représenté, d'élargir le guide d'ondes submicronique au niveau du réseau de diffraction jusqu'à atteindre sensiblement les dimensions du mode optique de la fibre optique pour permettre un meilleur couplage. Une fibre optique 11, dont une des extrémités est placée en regard du réseau de diffraction 9, envoie un faisceau lumineux 13 vers le réseau de diffraction 9. Lorsque la fibre optique 11 éclaire convenablement le réseau de diffraction 9 (bon alignement), un faisceau lumineux (flèche 15) circule dans le guide d'ondes. On notera que la structure de la figure 1 peut également être utilisée pour transmettre un faisceau lumineux provenant d'un circuit optique intégré en direction de la fibre optique 11 par l'intermédiaire du coeur du guide d'ondes 3.

Pour qu'un circuit optique fonctionne correctement et que la lumière soit couplée entre une fibre optique et un guide d'ondes submicronique d'un circuit optique intégré, il est nécessaire que la fibre optique soit parfaitement alignée avec le dispositif de couplage qui lui est associé.

Plusieurs méthodes ont été proposées pour réaliser cet alignement. Par exemple, le circuit optique intégré peut être prévu pour fournir un faisceau lumineux en direction du dispositif de couplage, et l'alignement de la fibre optique est obtenu lorsque la quantité de lumière qu'elle transporte est maximale. On peut également prévoir de former un dispositif photodétecteur dans le circuit optique intégré pour détecter la position de la fibre permettant le transport d'un maximum d'intensité lumineuse en direction du circuit optique.

Cependant, ces méthodes ont l'inconvénient de nécessiter la présence, dans tout circuit optique intégré, d'éléments dédiés à l'alignement des fibres optiques, par exemple des dispositifs d'éclairement ou des photodétecteurs. De plus, lors de l'alignement, le circuit optique intégré doit être en fonctionnement et nécessite donc une alimentation. Pour pallier cet inconvénient, on a proposé de modifier les guides d'ondes ou les réseaux de couplage pour pouvoir obtenir un signal d'alignement pendant les périodes de réglage, mais ceci complique la fabrication et risque de perturber le fonctionnement normal du circuit optique.

Le brevet américain 7 024 066 propose d'ajouter à une structure de circuit intégré optique un réseau spécifique destiné à un positionnement.

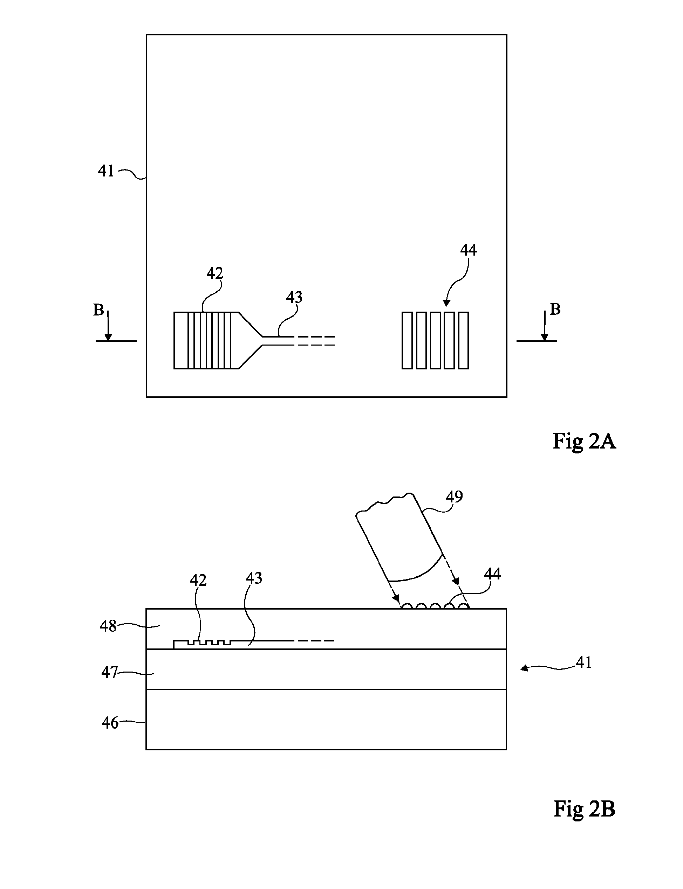

Plus particulièrement, comme le représente en vue de dessus la figure 2A et en vue en coupe la figure 2B, ce brevet propose d'ajouter à un circuit intégré optique 41 comprenant un réseau fonctionnel 42 destiné à introduire de la lumière dans un guide d'ondes submicronique 43 couplé à des éléments du circuit non représentés, un réseau supplémentaire 44 du type réseau de Littrow. Comme le montre la vue en coupe de la figure 2B, le circuit intégré optique est formé sur un substrat 46 et comprend des guides d'ondes submicroniques 43 entre deux couches de gaine 47 et 48. Le réseau de Littrow 44 est ajouté sur la surface supérieure de la gaine optique supérieure 48. Ce brevet américain propose de positionner une fibre optique 49 sur le réseau de Littrow 44 et, connaissant par construction la distance entre les réseaux 44 et 42, de déplacer la fibre optique de la distance connue séparant le réseau de positionnement 44 du réseau fonctionnel 42.

Toutefois, ce procédé, s'il permet le positionnement de la fibre, ne permet pas son alignement, c'est-à-dire son réglage en orientation selon l'angle optimal à prévoir entre la fibre et le réseau fonctionnel. Ce procédé ne permet qu'un réglage grossier de l'alignement entre une fibre optique et un réseau associé à un guide d'ondes fonctionnel. En effet, par exemple pour une longueur d'onde de 1550 nm et une tolérance de fabrication typique de 10 % pour les dimensions critiques du guide et du réseau, l'angle de couplage peut varier de 6° à 19° alors que la valeur nominale est de 13°. Le taux de couplage fibre/réseau chute de 1 dB (20 %) pour une variation d'angle de seulement 3 degrés. Ceci constitue une première raison pour laquelle l'utilisation d'un réseau de Littrow ne permet pas un alignement mais seulement un prépositionnement : le réseau de Littrow n'aura jamais les mêmes caractéristiques que les réseaux de couplage fonctionnels, ce réseau ayant lui-même des caractéristiques variables. Par ailleurs, même en ce qui concerne le positionnement, le réseau de Littrow est fabriqué sur une couche différente par des opérations de masquage différentes des réseaux fonctionnels. Les tolérances de positionnement ne sont donc pas rigoureuses et identiques.

### Résumé

Un besoin existe d'un dispositif et d'un procédé permettant l'alignement d'une fibre optique et d'un guide d'ondes submicronique associé à un circuit optique, indépendamment du circuit optique intégré et de son fonctionnement.

On s'intéressera plus particulièrement ici aux dispositifs de couplage à réseau entre fibre optique et guide d'ondes submicronique du type représenté en figure 1. En effet, ce type de dispositif de couplage par réseau permet notamment d'introduire de la lumière dans un guide d'ondes avant découpe d'une tranche comportant un grand nombre de circuits intégrés optiques en puces individuelles.

Un objet d'un mode de réalisation de la présente invention est de prévoir un réseau de référence pour l'alignement d'un guide d'ondes optique qui ne présente pas les inconvénients des dispositifs connus.

Un objet d'un mode de réalisation de la présente invention est de prévoir un procédé de fabrication ne nécessitant pas d'étapes supplémentaires par rapport aux procédés classiques.

Ainsi, un mode de réalisation de la présente invention prévoit un circuit intégré optique comprenant un guide d'ondes opérationnel submicronique associé à un réseau opérationnel de couplage avec une fibre optique, comprenant en outre un réseau d'alignement, identique au réseau opérationnel, associé à un guide d'ondes borgne et disposé à une distance connue du réseau opérationnel.

Selon un mode de réalisation de la présente invention, le réseau opérationnel et le réseau d'alignement résultent de mêmes étapes de fabrication.

Selon un mode de réalisation de la présente invention, les matériaux constitutifs sont essentiellement du silicium et de l'oxyde de silicium.

Selon un mode de réalisation de la présente invention, il est prévu des moyens réflecteurs à l'extrémité du guide d'ondes borgne.

Selon un mode de réalisation de la présente invention, il est prévu un ou plusieurs réseaux opérationnels en ligne avec deux réseaux d'alignement qui les encadrent.

Un mode de réalisation de la présente invention prévoit un dispositif d'alignement d'un circuit intégré optique, comprenant des moyens d'alignement d'une fibre optique sur le réseau d'alignement ; et des moyens de déplacement de la fibre optique par rapport au circuit, en conservant son orientation, de la distance connue entre le réseau d'alignement et le réseau opérationnel.

Selon un mode de réalisation de la présente invention, les moyens d'alignement comprennent des moyens de détection de la lumière renvoyée par le réseau d'alignement et de détermination de maximum.

Selon un mode de réalisation de la présente invention, les moyens de déplacement sont automatisés.

Un mode de réalisation de la présente invention, prévoit un procédé d'alignement entre un guide d'ondes opérationnel submicronique associé à un réseau opérationnel de couplage et une fibre optique, comprenant les étapes suivante :
prévoir un réseau d'alignement sensiblement identique au réseau opérationnel et couplé à un guide d'ondes borgne, le réseau d'alignement étant disposé à une distance connue du réseau opérationnel ;
aligner une fibre optique sur le réseau d'alignement en rendant maximum la lumière renvoyée par le guide d'ondes borgne vers la fibre optique ; et
déplacer la fibre optique en conservant son orientation de la distance entre le réseau d'alignement et le réseau opérationnel.

Selon un mode de réalisation de la présente invention, il est prévu en outre une étape de fixation entre la fibre optique mise en position finale et le circuit intégré optique.

Selon un mode de réalisation de la présente invention, le procédé d'alignement est mis en oeuvre entre une structure de référence et une structure de test.

Selon un mode de réalisation de la présente invention, il est prévu un procédé d'alignement sur un circuit intégré comprenant un ou plusieurs réseaux opérationnels en ligne avec deux réseaux d'alignement qui les encadrent, d'un ensemble de fibres optiques de même écart que les divers réseaux et montées dans un support maintenant leurs extrémités parallèles, dans lequel on aligne les deux fibres d'extrémités sur les deux réseaux d'alignement extrêmes, d'où il résulte que l'on obtient directement un positionnement précis des fibres intermédiaires sur les réseaux opérationnels.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, illustre une structure de couplage à réseau entre une fibre optique et un guide d'ondes submicronique ;
les figures 2A et 2B, décrites précédemment, illustrent un procédé de positionnement d'une fibre optique utilisant un réseau de référence ;
les figures 3A et 3B illustrent un procédé d'alignement d'une fibre optique utilisant une structure de référence d'alignement selon un mode de réalisation de la présente invention ;
la figure 4 représente une variante de réalisation d'une structure de référence d'alignement ;
la figure 5 illustre un procédé de test selon l'art antérieur ; et
la figure 6 illustre un procédé de test utilisant un mode de réalisation de la présente invention.

Comme cela est habituel dans la représentation des circuits intégrés, les diverses figures ne sont pas tracées à l'échelle.

### Description détaillée

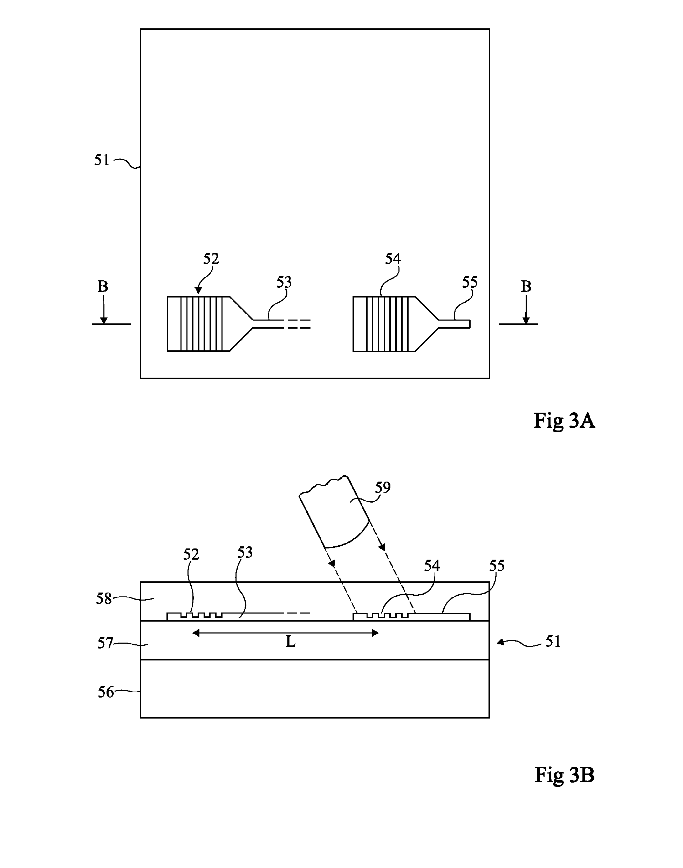

Les figures 3A et 3B sont une vue de dessus et une vue en coupe d'un exemple de réalisation d'un dispositif d'alignement d'une fibre optique sur un guide d'ondes submicronique utilisant un couplage à réseau et un réseau d'alignement spécifique.

La figure 3A représente une puce d'une tranche de circuits intégrés optiques 51 comprenant un réseau de couplage 52 entre une fibre optique (non représentée en figure 3A) et un guide d'ondes submicronique 53 couplé à des dispositifs actifs non représentés. On prévoit en outre une structure d'alignement comprenant un réseau d'alignement 54, de préférence identique au réseau de couplage 5, couplé à un guide d'ondes borgne 55, c'est-à-dire un guide dont le coeur s'arrête brusquement. Typiquement, le coeur se termine sur une face plane perpendiculaire à l'axe de propagation dans le coeur du guide. Après cette face plane, on trouve un milieu d'indice de réfraction différent de celui du coeur (avantageusement inférieur pour augmenter le taux de réflexion). Diverses variantes de guide d'ondes borgne sont indiquées ci-après.

Comme le représente la vue en coupe de la figure 3B, la puce de circuit intégré optique est formée sur un substrat 56 et comprend notamment les structures de réseaux et de guides d'ondes optiques 52, 53, 54, 55 dans une couche de guidage 52, 53, 54, 55 formée entre deux couches de gaine 57 et 58. Une fibre optique 59 est alignée sur le réseau d'alignement 54. Cet alignement est possible car la lumière envoyée par le réseau dans le guide d'ondes borgne 55 est réfléchie à l'extrémité de ce guide d'ondes borgne et est renvoyée dans la fibre optique. Divers moyens peuvent être prévus pour capter le faisceau renvoyé et positionner et orienter la fibre par rapport à la tranche de façon à rendre maximum l'intensité détectée. Par exemple, on prélèvera une partie de la lumière renvoyée au moyen d'une séparatrice ou autre coupleur pour l'envoyer vers un photodétecteur dont on recherchera un maximum.

On peut ainsi aligner avec une grande précision la fibre optique sur le réseau d'alignement 54. Ensuite, étant donné que le réseau d'alignement est formé dans la même couche et par les mêmes techniques que les réseaux fonctionnels tels que le réseau 53, il sera possible de déplacer avec précision le guide d'ondes optique sans modifier son orientation pour qu'il soit couplé au réseau fonctionnel 52. Le déplacement entre le guide d'ondes et la tranche est un mouvement relatif et on pourra aussi déplacer la tranche par rapport au guide d'ondes. Bien entendu, ces déplacements seront automatisés à partir des données de conception des circuits. Ceci est dû au fait que les deux réseaux sont identiques et réalisés en même temps (avantageusement). En effet, étant donné que le ou les réseaux d'alignement et le ou les réseaux fonctionnels ont les mêmes caractéristiques, on a la même tolérance de positionnement, et on a donc des conditions optimales de couplage identiques sur tous les axes d'alignement et ce quelles que soient les tolérances de fabrication.

Après les étapes d'alignement et de test, une fois la fibre optique positionnée en regard d'un réseau opérationnel, on pourra prévoir de fixer la fibre optique mise en position finale et le circuit intégré optique, de préférence par une colle de même indice que la fibre.

Bien entendu, la figure n'est pas à l'échelle et les réseaux occupent en fait une plus petite surface du circuit intégré optique que cela n'est représenté. En outre, on a représenté une puce de circuit intégré optique découpée. En pratique, on pourra procéder aux opérations de positionnement et d'alignement avant découpe d'une tranche en puces. Ceci permet notamment d'analyser des structures de test disposées par exemple dans les zones de découpe de la tranche.

D'autre part, on a représenté et décrit une réalisation particulière de guide d'ondes optique comprenant une couche de guidage d'indice donné entre deux couches de gaine d'indices différents. On connaît de nombreux matériaux pour réaliser de telles structures de guidage et on connaît d'autres types de guides d'ondes optiques qui pourront avantageusement être également utilisés sans sortir du domaine de la présente description. Par exemple, le coeur du guide sera réalisé en silicium, InP, silice dopée au phosphore ou au bore, germanium ou nitrure de silicium. L'enrobage formant la gaine optique pourra être réalisée en silice, silice dopée au phosphore ou au bore, germanium, nitrure de silicium, oxyde de silicium, air, etc.

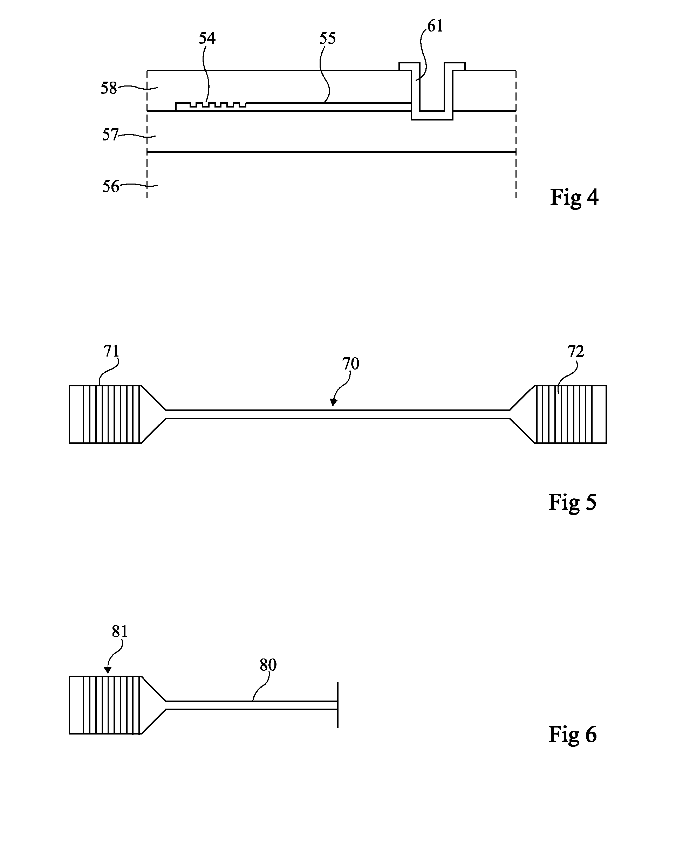

La figure 4 est une vue en coupe illustrant une structure particulière du réseau d'alignement 54 associé à un guide d'ondes borgne 55 tel que décrit précédemment. Pour augmenter la quantité de lumière renvoyée par ce guide d'ondes borgne, on pourra rendre son extrémité plus réfléchissante, par exemple en formant une ouverture dans la couche de gaine supérieure 58 au niveau de cette extrémité et, avantageusement, en revêtant cette ouverture d'une couche métallique 61, ce qui améliore le coefficient de réflexion des ondes. De nombreux autres moyens pourront être prévus pour augmenter cette réflexion à l'extrémité du guide d'ondes borgne. On pourra par exemple former une structure de type miroir de Bragg, telle que décrite dans la publication : "Ultracompact silicon-on-insulator ridge-waveguide mirrors with high reflectance" de P. Velha, JC Rodier et al. parue dans Applied Physics Letters, volume 89, Issue 17, id. 171121.

Les figures 5 et 6 sont destinées à illustrer un avantage de la structure selon la présente invention.

De façon classique, quand on veut tester les pertes de propagation dans les guides d'ondes formés sur un circuit intégré optique, on forme aux deux extrémités d'un guide d'ondes de test 70 des réseaux de couplage 71 et 72. On injecte de la lumière dans le réseau 71 et on analyse la lumière détectée dans le réseau 72. De façon connue, de telles mesures sont délicates car elles mesurent non seulement l'atténuation du guide d'ondes 70, mais également les défauts de couplage entre fibres optiques d'entrée et de sortie et réseaux d'entrée et de sortie 71, 72.

Comme l'illustre la figure 6, pour effectuer une telle mesure avec plus de précision, on pourra utiliser la technique à réseau de référence associé à un guide d'ondes borgne tel que décrite précédemment. Pour cela, un guide d'ondes 80, de longueur suffisante pour permettre des mesures de propagation, est terminé par une extrémité borgne, de préférence rendue réfléchissante de la façon décrite en relation avec la figure 4. Ainsi, en injectant de la lumière par un unique guide d'ondes dans un unique réseau d'entrée 81, on pourra mesurer avec précision l'atténuation liée à un aller/retour dans le guide d'ondes optique 80. Ce type de mesure présente l'avantage que, pour mesurer une atténuation donnée, on a besoin seulement d'un guide d'ondes 80 deux fois plus court que le guide d'ondes 70 utilisé classiquement.

La présente invention est susceptible de nombreuses variantes et modifications. Notamment, on pourra prévoir plusieurs réseaux d'alignement et plusieurs réseaux de couplage. On pourra notamment prévoir de disposer sur la puce un ou plusieurs réseaux opérationnels en ligne avec deux réseaux d'alignement qui les encadrent. Corrélativement, une rangée de fibres optiques de même écart que les divers réseaux est montée dans un support maintenant leurs extrémités parallèles. Ainsi, en alignant les deux fibres d'extrémités sur les deux réseaux d'alignement extrêmes, on obtient directement un positionnement précis des fibres intermédiaires sur les réseaux opérationnels.

## Revendications

1. Circuit intégré optique comprenant un guide d'ondes opérationnel submicronique (53) associé à un réseau opérationnel (52) de couplage avec une fibre optique, comprenant en outre un réseau d'alignement (54), identique au réseau opérationnel, associé à un guide d'ondes borgne (55) et disposé à une distance connue du réseau opérationnel, ce guide d'ondes borgne consistant en une portion de guide d'ondes dont le coeur est interrompu dans le diélectrique de revêtement qui l'entoure.

2. Circuit intégré optique selon la revendication 1, dans lequel le réseau opérationnel (52) et le réseau d'alignement (54) résultent de mêmes étapes de fabrication.

3. Circuit intégré optique selon la revendication 1 ou 2, dont les matériaux constitutifs sont essentiellement du silicium et de l'oxyde de silicium.

4. Circuit intégré optique selon la revendication 1, comprenant des moyens réflecteurs (61) à l'extrémité du guide d'ondes borgne.

5. Circuit intégré optique selon la revendication 1, comprenant un ou plusieurs réseaux opérationnels en ligne avec deux réseaux d'alignement qui les encadrent.

6. Dispositif d'alignement d'un circuit intégré optique selon la revendication 1, comprenant :
des moyens d'alignement d'une fibre optique (59) sur le réseau d'alignement ; et
des moyens de déplacement de la fibre optique par rapport au circuit, en conservant son orientation, de la distance connue entre le réseau d'alignement et le réseau opérationnel.

7. Dispositif d'alignement selon la revendication 6, dans lequel les moyens d'alignement comprennent des moyens de détection de la lumière renvoyée par le réseau d'alignement et de détermination de maximum.

8. Dispositif d'alignement selon la revendication 6, dans lequel les moyens de déplacement sont automatisés.

9. Procédé d'alignement entre un guide d'ondes opérationnel submicronique (53) associé à un réseau opérationnel (52) de couplage et une fibre optique, comprenant les étapes suivantes :
prévoir un réseau d'alignement (54) sensiblement identique au réseau opérationnel et couplé à un guide d'ondes borgne (55), le réseau d'alignement étant disposé à une distance connue du réseau opérationnel ;
aligner une fibre optique sur le réseau d'alignement en rendant maximum la lumière renvoyée par le guide d'ondes borgne vers la fibre optique ; et
déplacer la fibre optique en conservant son orientation de la distance entre le réseau d'alignement et le réseau opérationnel.

10. Procédé d'alignement selon la revendication 9, comprenant en outre une étape de fixation entre la fibre optique mise en position finale et le circuit intégré optique.

11. Procédé d'alignement selon la revendication 9, mis en oeuvre entre une structure de référence et une structure de test.

12. Procédé d'alignement sur un circuit intégré optique selon la revendication 5, d'un ensemble de fibres optiques de même écart que les divers réseaux et montées dans un support maintenant leurs extrémités parallèles, dans lequel on aligne les deux fibres d'extrémités sur les deux réseaux d'alignement extrêmes, d'où il résulte que l'on obtient directement un positionnement précis des fibres intermédiaires sur les réseaux opérationnels.
